# EUROPÄISCHE PATENTSCHRIFT

(11) **EP 1 161 808 B1**
(45) Veröffentlichungstag und Bekanntmachung des Hinweises auf die Patenterteilung: **27.07.2005**
(21) Anmeldenummer: 00916807.1
(22) Anmeldetag: 13.03.2000
(51) Int. Cl.: H04L 1/00

(54) **VERFAHREN ZUR ADAPTION DER BETRIEBSART EINES MULTI-MODE-CODECS AN SICH VERÄNDERNDE FUNKBEDINGUNGEN IN EINEM CDMA-MOBILFUNKNETZ**
METHOD FOR ADAPTING THE MODE OF OPERATION OF A MULTI-MODE CODEC TO THE CHANGING CONDITIONS OF RADIO TRANSMISSION IN A CDMA MOBILE RADIO NETWORK
PROCEDE POUR L'ADAPTATION DU MODE DE FONCTIONNEMENT D'UN CODEUR-DECODEUR MULTIMODE A DES CONDITIONS RADIO VARIABLES DANS UN RESEAU DE RADIOTELEPHONIE MOBILE CDMA

(30) Priorität: 12.03.1999 DE 19911179
(43) Veröffentlichungstag der Anmeldung: 12.12.2001
(73) Patentinhaber: T-Mobile Deutschland GmbH, 53227 Bonn (DE)
(72) Erfinder: BEMMER, René, D-53175 Bonn (DE); LIU, Zhongrong, D-53225 Bonn (DE)
(74) Vertreter: Riebling, Peter, Dr.-Ing.
(86) Internationale Anmeldenummer: PCT/DE2000/000751
(87) Internationale Veröffentlichungsnummer: WO 2000/056001

(56) Entgegenhaltungen:
- EP-A- 0 627 827
- US-A- 5 673 266
- US-A- 5 701 294
- KLEIDER J E ET AL: "AN ADAPTIVE-RATE ANTI-JAM SYSTEM FOR OPTIMAL VOICE COMMUNICATION" PROCEEDINGS OF MILCOM, IEEE, Bd. 3, 2. November 1997 (1997-11-02), Seiten 1103-1107, XP000749707 New York, USA

## Beschreibung

Die Erfindung betrifft ein Verfahren zur Adaption der Betriebsart eines Multi-Mode-Codecs an sich verändernde Funkbedingungen in einem CDMA-Mobilfunknetz.

Mobilfunknetze codieren Sprachsignale in einem anderen Verfahren als Festnetze. Die Sprachcodierung, wie sie zwischen Mobilstation (MS) und dem Radio Access Network (RAN) verwendet wird, berücksichtigt - im Gegensatz zur Sprachcodierung im Festnetz - in besonderem Maß die Ausbreitungseigenschaften der Funkstrecke. Für Gespräche zwischen Mobilstationen im gleichen Mobilnetz ist eine Umsetzung auf unterschiedliche Sprachcodierungen (Transcodierung) nicht unbedingt notwendig, wohingegen diese Notwendigkeit bei Gesprächen zwischen Benutzern einer Mobilstation und eines Festnetztelefons besteht. Gespräche zwischen Mobilstationen ohne eine Umsetzung auf unterschiedliche Sprachcodierungen werden transcoderfrei genannt.

Die Ausbreitungsbedingungen einer Funkstrecke sind ständigen Änderungen unterzogen. Dabei handelt es sich zum einen um die Änderungen der Ausbreitungsbedingungen und zum anderen um Interferenzen. Sowohl die Ausbreitungsbedingungen als auch die Interferenzen können sich während einer bestehenden Kommunikationsverbindung schnell ändern. Für die Interferenzen sind Teilnehmer im gleichen Netz oder andere Funksysteme verantwortlich. Je nach gegebenen Ausbreitungsbedingungen sind Anpassungen in der Quellcodierung notwendig.

Um die Qualität der Verbindung bei sich ändernden Bedingungen der Funkstrecke möglichst aufrecht zu erhalten, kann man in einem CDMA-System folgende Methoden verwenden:
- Adaption der Brutto-Bitrate
- Adaption der Sendeleistung
- Adaption der Codec-Betriebsart: d.h. z.B. Wechseln zu einer robusteren Codec-Betriebsart bei sich verschlechternden Funkbedingungen.

Unter einer robusteren Codec-Betriebsart versteht man eine reduzierte Nettobitrate (Bitrate der Sprachcodierung) und eine dafür erhöhte Kanalcodierung. Unter Codec wird eine Funktion verstanden, die Sprachsignale senderseitig für die Übertragung codiert und empfängerseitig empfangene Sprachsignale decodiert.
Die beschriebenen Methoden werden in Kombination verwendet.

Bisher wurde die Adaption für jede Funkschnittstelle separat vorgenommen. Bei einer MS-zu-MS-Verbindung wurde die Codierung des Sprachsignals auf jeder Funkschnittstelle unabhängig voneinander angepasst. Bei einem Übergang in das drahtgebundene Netz wurde das Sprachsignal jeweils transcodiert. Durch diese doppelte Umsetzung ist eine Unabhängigkeit der Adaptionen auf den beteiligten Funkschnittstellen gegeben.

In der US-A-5 701 294 ist ein zellulares Mobilfunksystem dargelegt, welches in Abhängigkeit von den sich ändernden Bedingungen und der sich ändernden Funkverbindungsqualität auf dem jeweiligen Funkkanal u. a. auch den Sprachcodierer bzw. den Betriebsmodus des Codecs hinsichtlich optimaler und ökonomischer Sprachqualität einstellt. Die Einstellung kann dabei von dem Mobilfunksystem oder von den Mobilstationen des Systems vorgenommen oder kontrolliert werden.

Der Aufsatz von Kleider J. E. et al: "An Adaptive-Rate Anti-Jam System for optimal Voice Communication", in Proceedings of Milcom, IEEE, Bd. 3, 2. November 1997, Seiten 1103-1107, XP000749707 behandelt die Optimierung der Sprachqualität durch geeignete Kombinationen aus Modulationsverfahren und Sourcecoding, gegebenenfalls gesteuert durch die Einführung eines Rückkopplungskanals. Die vorliegende Erfindung behandelt jedoch die Methode, wie die Codec-Betriebsart zu ändern ist.

Die EP-A-0 627 827 zeigt die Koordination der Übertragung zweier Datenströme über dieselbe Luftschnittstelle. Im Gegensatz hierzu sieht die vorliegende Erfindung jedoch die Koordination eines Datenstroms über zwei Luftschnittstellen vor.

Es ist Aufgabe der vorliegenden Erfindung, ein Verfahren zur Adaption der Betriebsart eines Multi-Mode-Codecs an sich verändernde Funkbedingungen in einem CDMA-Mobilfunknetz anzugeben, das eine automatische Adaption der Codec-Betriebsart während einer Kommunikationsverbindung vornimmt, und dadurch eine möglichst effiziente Übertragung von Sprachsignalen im Mobilfunknetz und zwischen Mobilfunknetz und Festnetz erlaubt.

Diese Aufgabe wird durch die kennzeichnenden Merkmale des unabhängigen Patentanspruchs gelöst.

Die Erfindung beruht darauf, dass eine Koordination beider an einer Verbindung beteiligten Funkschnittstellen eingeführt wird. Kern der Erfindung ist die Angabe eines Verfahrens, wie diese Anpassungen während einer bestehenden Kommunikationsverbindung vorgenommen werden können und diese vorgenommene oder vorzunehmende Änderung zwischen den beiden beteiligten Einrichtungen übermittelt werden kann.

Damit wird in vorteilhafter Weise erreicht, dass bei sich ändernden Funkbedingungen auf der Funkstrecke zwischen Mobilstationen und Basisstationen während einer Kommunikationsverbindung automatisch eine Optimierung der verwendeten Codec-Betriebsart auf die augenblicklichen Funkbedingungen erfolgt.
Dies erhöht merklich die Störresistenz und Übertragungsqualität im Mobilfunknetz und trägt zur optimalen Ausnutzung der Netzresourcen, wie z.B. Frequenzökonomie, benötigte Sendeleistungen, etc. bei.

Vorteilhafte Weiterbildungen und Ausführungen der Erfindung sind in den abhängigen Patentansprüchen angegeben.

Nachfolgend wird die Erfindung anhand eines Ausführungsbeispiels unter Bezugnahme auf mehrere Zeichnungsfiguren näher beschrieben. Dabei gehen aus den Zeichnungen und ihrer Beschreibung weitere Merkmale und Vorteile der Erfindung hervor.

Es zeigen:
- Figur 1:: Ein Beispiel für ein Mobilfunknetz mit tanscoderfreier MS-MS-Verbindung und MS-Festnetzverbindung unter Verwendung eines Transcoders;
- Figur 2:: Eine Darstellung der Übertragung der Sprachinformation auf allen Teilstrecken zwischen MS und MS, und MS und Festnetz;
- Figur 3:: Ein Beispiel für einen Übertragungsrahmen mit Feldern für Inband-Signalisierung;
- Figur 4:: Eine Darstellung der Übertragung der Sprachinformation zwischen MS und MS im Ausgangszustand;
- Figur 5:: Eine Darstellung der Signalisierung zur Änderung der Codec-Betriebsart; und
- Figur 6:: Eine Darstellung nach Änderung der Codec-Betriebsart auf einer Funkstrecke, d.h. asymmetrisches Senden und Empfangen.

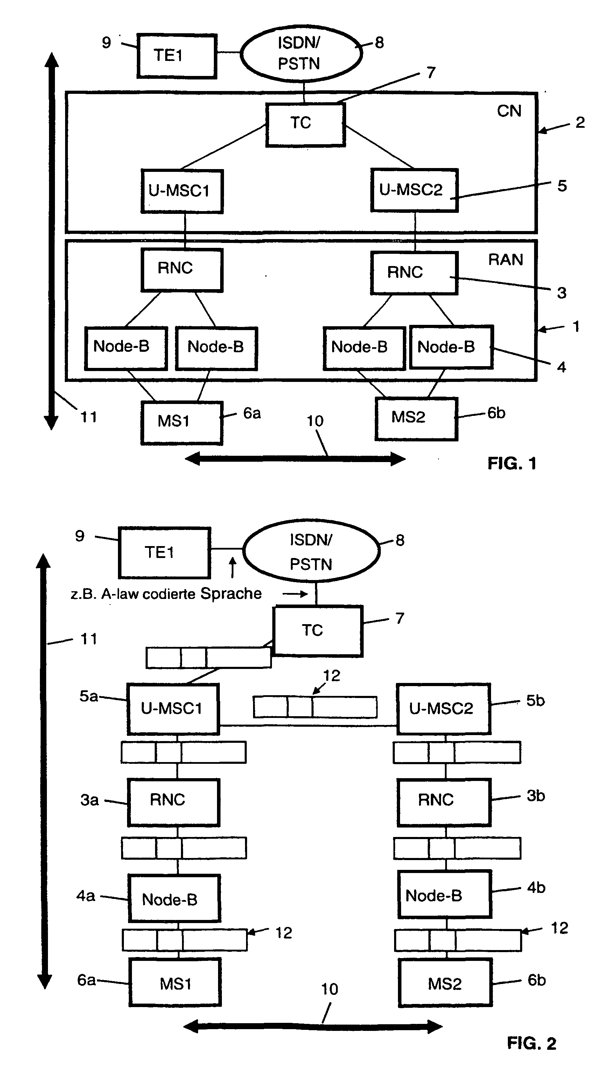

Es wird zunächst eine Netzarchitektur gemäß Figur 1 zugrundegelegt.
Das in Figur 1 dargestellte CDMA-Mobilfunknetz besteht aus zwei Teilnetzen, dem Radio Access Network (RAN) 1 und dem Core Network (CN) 2. Das RAN 1 umfasst die Knotentypen Radio Network Controller (RNC) 3, auch zu bezeichnen als Basisstationssteuerung, und Node-B 4, auch zu bezeichnen als Basisstation. Im Fall eines soft-handover sind an einer Gesprächsverbindung zwei oder mehrere Node-B 4 beteiligt. Das CN 2 umfasst den Knotentyp U-MSC 5 , auch zu bezeichnen als Mobilvermittlungsstelle. Zwischen einer Mobilstation (MS) 6 und dem RAN 1 liegt die Funkstrecke oder Luftschnittstelle. Das CN 2 ist mit dem Festnetz 8 (ISDN, PSTN) verbunden. Für das beschriebene Ausführungsbeispiel gelten folgende Annahmen:
- In allen Mobilstationen 6 wird ein Multi-Mode-Codec (MMC) implementiert, d.h. es können unterschiedlichen Sprachcodierungen mit variablen Codierparametem verwendet werden. Bei Multi-Mode-Codecs entspricht ein fester Parametersatz einer Codec-Betriebsart. Die möglichen unterschiedlichen Betriebsarten eines MMC dienen der Adaption der Sprachcodierung an die Bedingungen auf der Funkstrecke.
- Ein Transcoder 7 wird im CN 1 positioniert; dieser dient der Umsetzung der jeweiligen Sprachcodierung zwischen Mobilfunknetz 1,2 und Festnetz 8.
- Eine MS-zu-MS-Verbindung 10 ist eine transcoderfreie Verbindung, d.h. sie erfolgt ohne eine Umcodierung der Sprache auf dem Verbindungsweg zwischen beiden Mobilstationen 6a, 6b. Dies erfordert, daß die beiden Mobilstationen 6a, 6b für die Verbindung in einer Duplex-Richtung immer die gleiche Codec-Betriebsart verwenden.

Das erfindungsgemässe Verfahren zur Adaption der Codec-Betriebsart für ein in der Figur 1 dargestelltes Mobilfunknetz arbeitet wie nachfolgend beschrieben und verfügt über folgende Eigenschaften:
- Zwischen den an einer Verbindung beteiligten RNC's 3a, 3b oder zwischen RNC 3 und Transcoder 7 wird eine Inband-Signalisierung benutzt, d.h. Nutz- und Signalisierungsinformation werden im gleichen Kanal übertragen.
- In beiden Duplex-Verbindungsrichtungen können zur gleichen Zeit unterschiedliche Codec-Betriebsarten verwendet werden, d.h. die Codec-Betriebsart für MS 6a zu MS 6b (die erste MS sendet, die zweite MS empfängt) kann unterschiedlich sein zur Codec-Betriebsart für MS 6b zu MS 6a (die zweite MS sendet, die erste MS empfängt).
- Innerhalb des RAN 1 wird eine Outband-Signalisierung für die Änderung der Codec-Betriebsart verwendet.
- Der RNC 3 trifft die Entscheidung, die Codec-Betriebsart zu wechseln.
- Der RNC 3 entscheidet bei einem Wechsel der Codec-Betriebsart über den zu verwendenden physikalischen Funkkanal, d.h. über die Parameter der Kanalcodierung, die Brutto-Bitrate und die Sendeleistung für die neue Codec-Betriebsart.

Im folgenden wird angenommen, daß die Anzahl der zur Verfügung stehenden Codec-Betriebsarten N ist und daß die Betriebsart n+1 robuster als die Betriebsart n ist. L entspricht der maximalen Anzahl der Stufen, die bei einem Wechsel der Codec-Betriebsart übersprungen werden dürfen, wenn die Funkbedingungen sich verbessert haben.

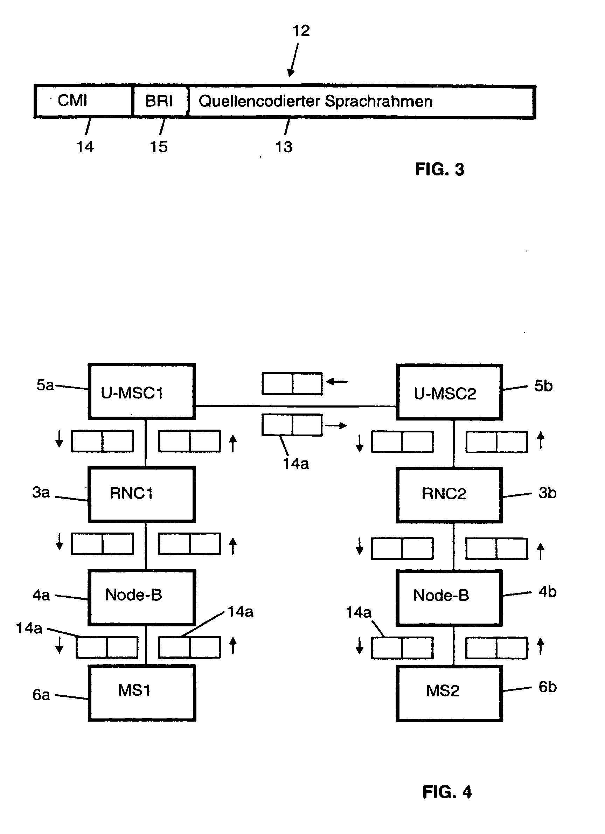

Die Sprachdaten für eine bestimmte Zeitperiode werden im Mobilfunknetz in sequentiellen Rahmen 12 übertragen. Gemäss Figur 3 entspricht jeder Rahmen 12 dem quellcodierten Sprachsignal 13 und einem Präfix. Die Zeitperiode wird als Rahmenlänge bezeichnet und beträgt beispielsweise 20 ms. Der Präfix besteht aus zwei Feldern 14, 15. Das erste Feld 14 wird als Codec Mode Identification (CMI) bezeichnet. CMI gibt an, welche Codec-Betriebsart für diesen Sprachrahmen 13 verwendet wird. Der Empfänger führt eine Sprachdecodierung gemäß der in CMI angegebenen Betriebsart n durch.

Das zweite Feld 15 wird als Better Radio condition Indication (BRI) bezeichnet. BRI wird verwendet, wenn sich die Funkbedingungen auf dem gesamten Verbindungsweg, d.h. auf zwei Funkstrecken im Fall einer MS-MS-Verbindung 10 und auf einer Funkstrecke im Fall einer MS-Festnetz-Verbindung, verbessert haben, und dadurch ein Wechsel zu einer weniger robusten Codec-Betriebsart durchgeführt werden kann. Ist beispielsweise der Wert BRI = 0, haben sich die Funkbedingungen nicht verbessert. Wird der Wert BRI auf BRI > 1 gesetzt, dann haben sich die Funkbedingungen verbessert. Je grösser der Wert BRI, desto mehr haben sich die Funkbedingungen verbessert.

Figur 2 gibt an, wie die Sprachinformation auf den jeweiligen Teilstrecken, übertragen wird. Hierbei wird zur Vereinfachung angenommen, daß jeweils nur ein Node-B 4 in die Verbindung involviert ist.

Für den Wechsel der Betriebsart gelten folgende Regeln:
- Ein Wechsel zu einer robusteren Betriebsart wird durchgeführt, wenn sich die Funkbedingungen auf einer der beiden Funkstrecken verschlechtern.
- Ein Wechsel zu einer weniger robusten Betriebsart wird durchgeführt, wenn sich die Funkbedingungen auf beiden Funkstrecken verbessern.

Vor einem Wechsel in eine andere Betriebsart herrscht folgender Ausgangszustand:

Gemäss Figur 4 besteht zwischen einer ersten MS 6a und einer zweiten MS 6b eine Kommunikationsverbindung. Die Mobilstationen 6a und 6b senden und empfangen in der selben Codec-Betriebsart, die durch das Rahmenpräfix 14a (CMIa) gekennzeichnet ist. Auch hier wird der Einfachheit halber angenommen, daß jeweils nur ein Node-B pro Mobilstation in die Verbindung involviert ist.

Jeder an der Verbindung beteiligte RNC 3a, 3b empfängt ständig Meßberichte von allen ihm zugeordneten, in die Funkverbindung involvierten Node-B 6a bzw. 6b. Stellt z.B. der der MS 6a zugeordnete RNC 3a fest, daß die Funkbedingungen auf der Luftschnittstelle zwischen dem Node-B 4a und der MS 6a schlechter werden, so ist ein Wechsel der Codec-Betriebsart notwendig.

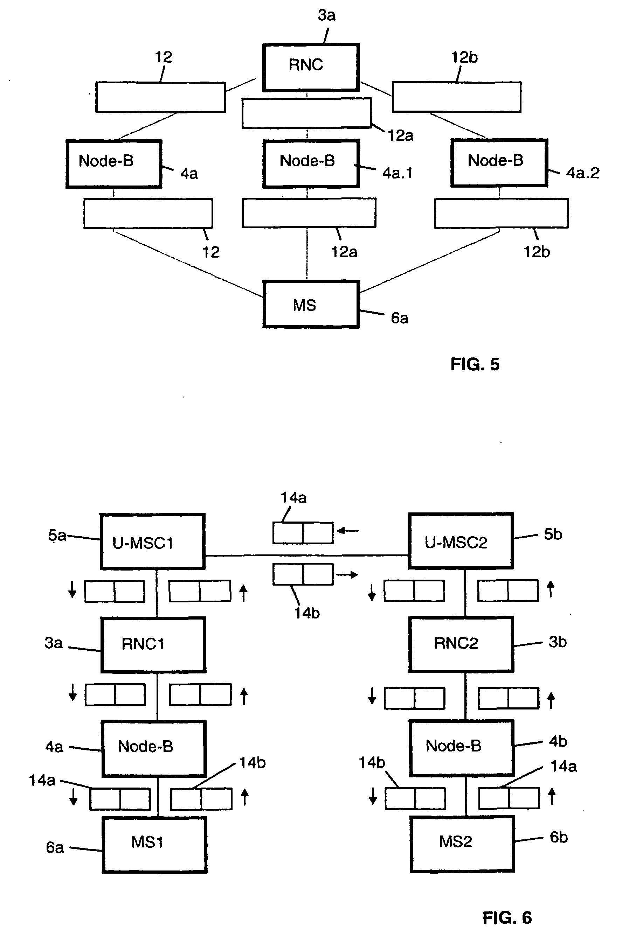

Auf dem Signalisierungskanal (Outband-Signalisierung) weist der RNC 3a die MS 6a an, eine neue Betriebsart, z.B. n + 1, zu verwenden und gibt zusätzlich den Zeitpunkt der Umschaltung an. Dies erfolgt auf dem Signalisierungskanal. Der Zeitpunkt wird mittels der Rahmenkennung angegeben. Diese Kennung wird zwischen dem RNC 3a und der MS 6a ausgetauscht, um eine gegenseitige Synchronisierung zu gewährleisten.
Da sich die MS 6a mit jedem in die Verbindung involvierten Node-B 4a, 4a.1, 4a.2 synchronisieren muß, werden auf jeder Funkschnittstelle zwischen MS 6a und dem jeweiligen Node-B 4a, 4a.1, 4a.2 unterschiedliche Rahmenkennungen für den inhaltlich gleichen Rahmen 12 verwendet, so wie es in Figur 5 dargestellt ist. Die MS 6a sendet ab dem angegebenen Zeitpunkt in der neuen Betriebsart n + 1, die durch das Präfix 14b (CMIb) gekennzeichnet ist.

Der RNC 3a empfängt von der MS 6a Sprachsignale in geänderter Betriebsart n + 1 und sendet diese an den RNC 3b weiter. Zusätzlich wird im Nutzkanal, d.h. Inband, die neue CMI 14b, entsprechend nun CMIb, übertragen bzw. signalisiert. Der RNC 3a empfängt Sprachsignale in unveränderter Betriebsart n, entsprechend CMIa 14a, von dem RNC 3b, wie es in Figur 6 dargestellt ist.
Der RNC 3b empfängt den Sprachrahmen 13 in geänderter Betriebsart n + 1 und ermittelt CMI, in diesem Fall CMIb. Der RNC 3b entscheidet aufgrund der Funkbedingungen in seinem Bereich über den physikalischen Kanal (Funkkanal), die Kanalcodierung, die Brutto-Bitrate und Sendeleistung für die neue Codec-Betriebsart n + 1 und teilt dies allen involvierten Node-B's 4b mit. Zugleich kopiert der RNC 3b den Sprachrahmen 12 und sendet diesen an alle involvierten Node-B 4b.

Die MS 6b empfängt den Sprachrahmen 12 in geänderter Betriebsart n + 1 und führt die Sprachdecodierung gemäß CMIb aus. Der Node-B 4b (bzw. alle Node-B's) teilt für jeden physikalischen Kontrollkanal der MS 6b die Kanalcodierung mit, damit die MS 6b entsprechend die Kanaldecodierung durchführt.
Die MS 6b sendet ab sofort in veränderter Betriebsart entsprechend CMIb.

Damit ist der Zielzustand erreicht, in dem die MS 6a und die MS 6b in geänderter Betriebsart n + 1 senden und empfangen.

Solange sich die Funkbedingungen bei einem RNC 3a bzw. 3b nicht verbessern, enthalten alle Sprachrahmen den Wert BRI = 0. Die augenblickliche Codec-Betriebsart wird beibehalten.
Sobald ein RNC 3a bzw. 3b feststellt, daß sich die Funkbedingungen verbessert haben und ein Wechsel von seiner Seite aus von der momentan verwendeten Codec-Betriebsart n auf n - l möglich ist, teilt er dies der zugeordneten MS 6a bzw. 6b mit. Die MS 6a bzw. 6b sendet daraufhin in ihren Sprachrahmen einen Wert BRI > 0, z.B. BRI = I. Auf beiden Funkstrecken wird jedoch unverändert die bisherige Codec-Betriebsart n verwendet.

Empfängt ein RNC 3a bzw. 3b Sprachrahmen mit BRI = I1 > 0 und sendet Sprachrahmen BRI = I2 > 0, leitet er einen Wechsel der Codec-Betriebsart von n auf n - l ein, wobei l den kleineren Wert aus I1 und I2 darstellt. Vorzugsweise wird also immer die Codec-Betriebsart gewählt, die den Funkbedingungen auf der schlechtesten Teilstrecke entspricht.

Die Verfahrensweise für den nachfolgenden Wechsel der Codec-Betriebsart ist identisch mit dem bereits beschriebenen Algorithmus.

Die Adaption der Codec-Betriebsart bei einer MS-Festnetz-Verbindung stellt einen Sonderfall der angegebenen Verfahren dar. Es betrifft hier einen Wechsel der Codec-Betriebsart in RNC 3 einerseits und im Transcoder 7 andererseits.

In diesem Fall ist die BRI für die vom Transcoder gesendeten Sprachrahmen, d.h. bei der Verbindung in Downlink oder MS-terminierender Richtung, immer gleich dem maximalen Wert L. Das bedeutet, dass die verwendete Codec-Betriebsart für die Verbindung ins Festnetz (über den Transcoder) keine Rolle spielt. Welche Codec-Betriebsart verwendet wird, hängt nur von der Funkstrecke von/zur Mobilstation ab.

### Zeichnungslegende und Verzeichnis der Abkürzungen

| | | |
|---|---|---|
| 1 | RAC | |
| 2 | CN | |
| 3, 3a,3b | RNC | |
| 4, 4a,4b | Node-B | |
| 5, 5a,5b | U-MSC | |
| 6, 6a,6b | MS | |
| 7 | Transcoder | |
| 8 | Festnetz | |
| 9 | Festnetzteilnehmer | |
| 10 | MS-zu-MS Verbindung | |
| 11 | MS-Festnetz-Verbindung | |
| 12,12a,12b | Übertragungsrahmen | |
| 13 | Sprachrahmen | |
| 14,14a,14b | Präfix CMI | |
| 15 | Präfix BRI | |
| CDMA | Code Division Multiple Access | Vielfachzugriff im Codemultiplex |
| MS | Mobile Station | Mobilstation |
| RAN | Radio Access Network | Mobilfunkteil |
| RNC | Radio Network Controller | Basisstationssteuerung |
| Node-B | B-Knoten, | Basisstation |
| CN | Core Network | Kemnetzwerk |
| U-MSC | U-Mobile Services Switching Center | Mobilvermittlungsstelle |
| PSTN | Public Switching Telephone Network | Festnetz |
| ISDN | Integrated Services Digital Network | |
| TE1 | Teilnehmereinheit | |
| MMC | Multi-Mode-Codec | Mehrmodus Codec |
| CMI | Codec Mode Identification | Identifikator des Codec-Modus |
| BRI | Better Radio Condition Indication | Indikator für bessere Verbindung |

## Patentansprüche

1. Verfahren zur Adaption der Betriebsart eines Mehrmodus Codecs an sich verändernde Funkbedingungen in einem Vielfachzugriff im Codemultiplex-Mobilfunknetz,
**dadurch gekennzeichnet,**
**dass** bei sich ändernder Funkverbindungsqualität diejenige Mobilstation (6a; 6b), an deren Luftschnittstelle sich die Funkbedingungen ändern und welche daher die Codec-Betriebsart ändert, die andere Mobilstation (6b; 6a) im Fall einer Mobilstation-zu-Mobilstation-Verbindung oder einen Transcoder (7) im Fall einer Mobilstation-zu-Festnetz-Verbindung, ebenfalls zur Änderung der Codec-Betriebsart veranlasst.

2. Verfahren nach Anspruch 1, **dadurch gekennzeichnet, dass** ein Wechsel zu einer robusteren Codec-Betriebsart durchgeführt wird, wenn sich die Funkbedingungen auf einer Seite der an der Verbindung beteiligten Funkstrecken verschlechtern.

3. Verfahren nach Anspruch 1, **dadurch gekennzeichnet, dass** ein Wechsel zu einer weniger robusten Betriebsart durchgeführt wird, wenn sich die Funkbedingungen auf allen an der Verbindung beteiligten Funkstrecken verbessern.

4. Verfahren nach einem der Ansprüche 1 bis 3, **dadurch gekennzeichnet, dass** die Entscheidung zum Wechsel der Codec-Betriebsart von einer Basisstationssteuerung (3) des Mobilfunknetzes ausgeht.

5. Verfahren nach einem der Ansprüche 1 bis 4, **dadurch gekennzeichnet, dass** eine Basisstationssteuerung (3) des Mobilfunknetzes bei einem Wechsel der Codec-Betriebsart über den zu verwendenden physikalischen Funkkanal entscheidet.

6. Verfahren nach einem der Ansprüche 1 bis 5, **dadurch gekennzeichnet, dass** die Basisstationssteuerungen (3) des Mobilfunknetzes ständig Messberichte über die Verbindungsqualität auf den Funkstrecken von allen zugeordneten, in die Verbindung involvierten Basisstationen (4) empfangen und auswerten und eine Basisstationssteuerung (3) anhand der Messwerte über einen Wechsel der Codec-Betriebsart entscheidet.

7. Verfahren nach einem der Ansprüche 1 bis 6, **dadurch gekennzeichnet, dass** zwischen den Basisstationssteuerungen (3) und den Mobilstationen des Mobilfunknetzes eine Outband-Signalisierung für die Änderung der Codec-Betriebsart verwendet wird.

8. Verfahren nach einem der Ansprüche 1 bis 7, **dadurch gekennzeichnet, dass** zwischen den in der Verbindung beteiligten Basisstationssteuerungen (3) des Mobilfunknetzes oder zwischen einer Basisstationssteuerung (3) und dem Transcoder (7) eine Inband-Signalisierung zum Austausch der verwendeten Codec-Betriebsart benutzt wird.

9. Verfahren nach Anspruch 8, **dadurch gekennzeichnet, dass** die Inband-Signalisierung in speziellen Feldern des Übertragungsrahmens (12) erfolgt, wobei ein erstes Feld (14) angibt, welche Codec-Betriebsart für diesen Übertragungsrahmen (12) verwendet wird, und ein zweites Feld (15) eine Änderung der Funkbedingungen der betreffenden Funkschnittstelle anzeigt.

10. Verfahren nach einem der Ansprüche 1 bis 9, **dadurch gekennzeichnet, dass** in beiden Duplex-Richtungen einer Verbindung zur gleichen Zeit unterschiedliche Codec-Betriebsarten verwendet werden.

11. Verfahren nach einem der Ansprüche 4 bis 10, **dadurch gekennzeichnet, dass** eine Basisstationssteuerung (3) des Mobilfunknetzes nach ihrer Entscheidung, die Codec-Betriebsart zu wechseln, die Mobilstation auf einem Signalisierungskanal zwischen Basisstationssteuerung (3) und Mobilstation anweist, eine neue Codec-Betriebsart zu verwenden und den Zeitpunkt der Umschaltung angibt.

12. Verfahren nach Anspruch 11, **dadurch gekennzeichnet, dass** der Zeitpunkt der Umschaltung mittels einer Rahmenkennung zwischen der Basisstationssteuerung (3) und der Mobilstation angegeben wird.

13. Verfahren nach einem der Ansprüche 11 oder 12, **dadurch gekennzeichnet, dass** die Mobilstation ab dem angegebenen Zeitpunkt in einer neuen Betriebsart sendet.

14. Verfahren nach einem der Ansprüche 1 bis 13, **dadurch gekennzeichnet, dass** eine Basisstationssteuerung (3) des Mobilfunknetzes von einer Mobilstation Übertragungsrahmen (12) mit Sprachsignale in geänderter Codec-Betriebsart empfängt und diese an andere, an der in der Verbindung beteiligten Basisstationssteuerungen (3) weitergibt.

## Claims

1. Method for adapting the mode of operation of a multimode codec to changing radio communications conditions in a multiple access in a code-division mobile communications network, **characterised in that** in the event of changing radio link quality that mobile station (6a; 6b) at whose air interface the radio communications conditions change and which, accordingly, alters its codec operating mode causes the other mobile station (6b; 6a) in the case of a mobile-station-to-mobile-station link or a transcoder (7) in the case of a mobile-station-to-fixed-network link likewise to change its codec operating mode.

2. Method according to claim 1, **characterised in that** a changeover to a more robust operating mode is carried out when the radio communications conditions on one side of the radio routes participating in the link deteriorate.

3. Method according to claim 1, **characterised in that** a changeover to a less robust operating mode is carried out when the radio communications conditions on all of the radio routes participating in the link improve.

4. Method according to one of claims 1 to 3, **characterised in that** the decision for changing over the codec operating mode emanates from a base station control unit (3) of the mobile communications network.

5. Method according to one of claims 1 to 4, **characterised in that** in the event of a changeover of the codec operating mode a base station control unit (3) of the mobile communications network decides on the physical radio communication channel to be used.

6. Method according to one of claims 1 to 5, **characterised in that** the base station control units (3) of the mobile communications network constantly receive and evaluate measurement reports about link quality on the radio routes of all associated base stations (4) involved in the link and a base station control unit (3) decides on a changeover in the codec operating mode on the basis of the measured values.

7. Method according to one of claims 1 to 6, **characterised in that** between the base station control units (3) and the mobile stations of the mobile communications network outband signalling is used for changing the codec operating mode.

8. Method according to one of claims 1 to 7, **characterised in that** between the participating base station control units (3) of the mobile communications network or between a base station control unit (3) and the transcoder (7) inband signalling is used for replacing the codec operating mode employed.

9. Method according to claim 8, **characterised in that** the inband signalling takes place in special fields of the transmission frame (12), wherein a first field (14) specifies which codec operating mode is being used for this transmission frame (12) and a second field (15) indicates a change in the radio communications conditions of the radio interface in question.

10. Method according to one of claims 1 to 9, **characterised in that** in both duplex directions of a link different codec operating modes are used at the same time.

11. Method according to one of claims 4 to 10, **characterised in that** a base station control unit (3) of the mobile communications network after its decision to change over the codec operating mode issues directions to the mobile station on a signalling channel between the base station control unit (3) and the mobile station to use a new codec operating mode and specifies the timing of the changeover.

12. Method according to claim 11, **characterised in that** the timing of the changeover is specified by means of a frame identification between the base station control unit (3) and the mobile station.

13. Method according to one of claims 11 or 12, **characterised in that** from the specified point in time the mobile station transmits in a new operating mode.

14. Method according to one of claims 1 to 13, **characterised in that** a base station control unit (3) of the mobile communications network receives transmission frames (12) with speech signals in changed codec operating mode from a mobile station and passes these on to other base station control units (3) participating in the link.

## Revendications

1. Procédé pour adapter le mode de fonctionnement d'un codeur-décodeur multimode à des conditions radio variables dans un accès multiple dans le réseau radiotéléphonique mobile à multiplexage par répartition en code,
**caractérisé en ce que** si la qualité de liaison radio varie, c'est la station mobile (6a, 6b) à l'interface de laquelle les conditions radio varient et qui modifie par conséquent le mode de fonctionnement du codeur-décodeur, qui amène l'autre station mobile (6b, 6a), dans le cas d'une liaison station mobile-station mobile, ou un transcodeur (7), dans le cas d'une liaison station mobile-réseau fixe, à modifier aussi le mode de fonctionnement du codeur-décodeur.

2. Procédé selon la revendication 1, **caractérisé en ce qu'**un passage à un mode de fonctionnement de codeur-décodeur plus robuste a lieu si les conditions radio se dégradent sur un côté des liaisons radioélectriques qui participent à la liaison.

3. Procédé selon la revendication 1, **caractérisé en ce qu'**un passage à un mode de fonctionnement moins robuste a lieu si les conditions radio s'améliorent sur toutes les liaisons radioélectriques qui participent à la liaison.

4. Procédé selon l'une des revendications 1 à 3, **caractérisé en ce que** la décision concernant le changement de mode de fonctionnement de codeur-décodeur part d'une commande de station de base (3) du réseau mobile.

5. Procédé selon l'une des revendications 1 à 4, **caractérisé en ce qu'**une commande de station de base (3) du réseau mobile décide, en cas de changement de mode de fonctionnement de codeur-décodeur, quel canal radio physique utiliser.

6. Procédé selon l'une des revendications 1 à 5, **caractérisé en ce que** les commandes de station de base (3) du réseau mobile reçoivent et évaluent en permanence des comptes-rendus de mesure sur la qualité de liaison sur les liaisons radioélectriques de toutes les stations de base (4) associées qui sont impliquées dans la liaison, et une commande de station de base (3) décide, à l'aide des valeurs de mesure, d'un changement de mode de fonctionnement de codeur-décodeur.

7. Procédé selon l'une des revendications 1 à 6, **caractérisé en ce qu'**une signalisation hors bande est utilisée entre les commandes de station de base (3) et les stations mobiles du réseau mobile pour modifier le mode de fonctionnement de codeur-décodeur.

8. Procédé selon l'une des revendications 1 à 7, **caractérisé en ce qu'**une signalisation intrabande est utilisée entre les commandes de station de base (3) du réseau mobile qui participent à la liaison ou entre une commande de station de base (3) et le transcodeur (7) pour échanger le mode de fonctionnement de codeur-décodeur utilisé.

9. Procédé selon la revendication 8, **caractérisé en ce que** la signalisation intrabande a lieu dans des zones spéciales du cadre de transmission (12), une première zone (14) indiquant quel mode de fonctionnement de codeur-décodeur est utilisé pour ce cadre de transmission (12), et une seconde zone (15) affichant une modification des conditions radio de l'interface radio concernée.

10. Procédé selon l'une des revendications 1 à 9, **caractérisé en ce que** des modes de fonctionnement de codeur-décodeur différents sont utilisés en même temps dans les deux sens de duplex d'une liaison.

11. Procédé selon l'une des revendications 4 à 10, **caractérisé en ce qu'**une commande de station de base (3) du réseau mobile, après avoir décidé de changer de mode de fonctionnement de codeur-décodeur, ordonne à la station mobile sur un canal de signalisation entre la commande de station de base (3) et la station mobile d'utiliser un nouveau mode de fonctionnement de codeur-décodeur, et indique le moment de la commutation.

12. Procédé selon la revendication 11, **caractérisé en ce que** le moment de la commutation est indiqué à l'aide d'une identification de cadre entre la commande de station de base (3) et la station de base.

13. Procédé selon la revendication 11 ou 12, **caractérisé en ce que** la station mobile, à partir du moment indiqué, émet dans un nouveau mode de fonctionnement.

14. Procédé selon l'une des revendications 1 à 13, **caractérisé en ce qu'**une commande de station de base (3) du réseau mobile reçoit d'une station mobile des cadres de transmission (12) avec des signaux vocaux dans un mode de fonctionnement de codeur-décodeur modifié et les retransmet à d'autres commandes de station de base (3) qui participent à la liaison.
